# EUROPÄISCHE PATENTSCHRIFT

(11) **EP 1 800 441 B1**
(45) Veröffentlichungstag und Bekanntmachung des Hinweises auf die Patenterteilung: **19.09.2012**
(21) Anmeldenummer: 04822309.3
(22) Anmeldetag: 11.10.2004
(51) Int. Cl.: H04W 48/18, H04W 88/06

(54) **VERFAHREN UND SYSTEM FÜR MOBILE NETZWERKKNOTEN IN HETEROGENEN NETZWERKEN**
METHOD AND SYSTEM FOR MOBILE NETWORK NODES IN HETEROGENEOUS NETWORKS
PROCEDE ET SYSTEME POUR NOEUDS DE RESEAUX MOBILES DANS DES RESEAUX HETEROGENES

(43) Veröffentlichungstag der Anmeldung: 27.06.2007
(73) Patentinhaber: Swisscom AG, 3050 Bern (CH)
(72) Erfinder: DANZEISEN, Marc, Ittigen, 3063 (CH); SCHAEDLER, Michael, Bolligen, 3065 (CH); RODELLAR, Daniel, Lausanne, 1003 (CH)
(74) Vertreter: BOVARD AG
(86) Internationale Anmeldenummer: PCT/EP2004/052501
(87) Internationale Veröffentlichungsnummer: WO 2006/039943

(56) Entgegenhaltungen:
- EP-A- 1 311 136
- EP-A- 1 387 530
- EP-A- 1 455 486
- WO-A-2004/006468

## Beschreibung

### Technisches Gebiet

Die vorliegende Erfindung betrifft ein Verfahren und ein System zum Erstellen einer optimierten Kommunikationsverbindung und/oder eines optimierten Kommunikationsnetzwerkes zwischen mindestens zwei mobilen Netzwerknodes. Insbesondere betrifft die Erfindung optimierte Kommunikationsverbindungen und/oder optimierte Kommunikationsnetzwerke für mobile Netzwerknodes in heterogenen Netzwerken.

### Stand der Technik

Weltweit werden zur Zeit immer mehr Computer- und Kommunikationssysteme dazu gebraucht, um grosse Datenmengen, insbesondere Multimediadaten über Netzwerke, wie z.B. einem LAN (Local Area Network), einem WAN (Wide Area Network) oder dem Internet via z.B. dem öffentlichen, geschalteten Telefonnetzwerk (PSTN: Public Switched Telephone Network), einem Mobilfunknetz (PLMN: Public Land Mobile Network) wie z.B. GSM-Netzen (Global System for Mobile Communication) oder UMTS-Netzen (Universal Mobile Telephone System) oder via z.B. einem WLAN (Wireless Local Area Network) etc. zu beziehen oder zu übermitteln. Dabei werden Daten dargestellt und/oder bearbeitet und/oder anderen Computersystemen modifiziert zur Verfügung gestellt. Solche Daten umfassen z.B. digitale Daten wie Texte, Graphiken, Bilder, Animationen, Video, Quicktime und Tonaufnahmen. Dazu gehören auch MPx (z.B. MP3) oder MPEGx (z.B. MPEG7) Standards, wie sie durch die Moving Picture Experts Group definiert werden. Gleichzeitig ist in den letzten Jahren ebenfalls weltweit die Zahl von mobilen Netzwerkbenutzern, insbesondere von Internetbenutzern und der dort angebotenen Information exponentiell gestiegen. Das wachsende Angebot an IP-fähigen (Internet Protocol) mobilen Geräten, wie z.B. PDAs (Personal Digital Assistant), Mobilfunktelefonen und Laptops, geht mit dieser Entwicklung Hand in Hand. Der Übergang von fixen Netzwerknodes in Netzwerken zu flexibleren Anforderungen durch erhöhte Mobilität hat eben erst begonnen. In der Mobilfunktelefonie z.B. zeigt sich diese Tendenz u.a. auch an neuen Standards wie GPRS (General Packet Radio Services), EDGE (Enhanced Data GSM Environment), UMTS (Universal Mobile Telecommunications Service), HSUPA (High-Speed Uplink Packet Access) oder HSDPA (High-Speed Downlink Packet Access). Um den Unterschied zwischen der momentanen Realität und den IP-Verbindungsmöglichkeiten der Zukunft zu verstehen, kann man sich als Vergleich die Entwicklung der Telefonie Richtung Mobilität in den letzten zwanzig Jahren vors Auge rufen.

Mobile Computerbenutzung unterscheidet sich in vielen Arten von Computerbenutzung und Netzwerkfähigkeit in Festnetzwerken. Bei mobiler Netzwerkbenutzung stehen heute meist mehrere verschiedene Netzwerkstandards für die Anbindung des mobilen Netzwerknodes an ein Netzwerk zur Verfügung. Die verschiedenen Netzwerkanschlüsse unterscheiden sich jedoch typischerweise stark in Abhängigkeit des Standortes, des Netzwerkanschlusses etc., was die Sicherheit, Datendurchsatzrate, Quality of Service (QoS) Parameter, Kosten des Datenverkehrs oder der Nutzungsdauer, etc. betrifft. Insbesondere kann eine Verbindung zeitweilig ganz unterbrochen werden. Z.B. kann ein mobiler Benutzer zuerst mittels Festnetzanschluss im Firmennetzwerk gearbeitet haben, dann beim Transfer zum Flughafen im Taxi z.B. mittels GPRS oder UMTS über ein Mobilfunknetz und schliesslich bei einem WLAN Hotspot oder Access Point im Flughafenwarteraum weiterarbeiten. Dabei sollte ein bestehender Netzwerk-Zugriff von Applikationen des mobilen Netzwerknodes nicht unterbrochen werden, wenn der Benutzer seinen Standort im Netzwerk ändert. Im Gegenteil sollten alle Verbindungs- und Schnittstellenänderungen z.B. bei einem Wechsel zwischen gleichen oder unterschiedlichen Netzwerken (Ethernet, Mobilfunknetz, WLAN, Bluetooth etc.) automatisch und nicht interaktiv geschehen können, so dass der Benutzer davon nicht einmal Kenntnis zu haben braucht. Dies gilt auch bei einem Schnittstellenwechsel, z.B. während der Benutzung von Real-Time-Applikationen. Sinnvollerweise sollte ein Schnittstellenwechsel im mobilen Netzwerknode basierend auf Datenübertragungsbandbreite, Kosten, Sicherheit etc. zusätzlich optimiert werden können. Idealerweise sollte dies natürlich automatisiert geschehen können. Wirkliches mobiles Computing weist viele Vorteile basierend auf einem jederzeitige stabilen Zugang, z.B. zum Internet, auf. Erst mit einem solchem Zugang lässt sich die Arbeit wirklich frei und unabhängig vom Schreibtisch gestalten. Die Anforderungen an mobile Netzwerknodes in Netzwerken unterscheiden sich aber von der erwähnten Entwicklung in der Mobilfunktechnik auf verschiedene Arten. Die Endpunkte im Mobilfunk sind gewöhnlich Menschen. Bei mobilen Nodes können aber Computerapplikationen Interaktionen zwischen anderen Netzteilnehmern ohne jegliches menschliches Zutun oder Eingreifen ausführen. Beispiele dazu finden sich in Flugzeugen, Schiffen und Automobilen zur Genüge. So kann insbesondere mobiles Computing mit Internet-Zugriff zusammen mit anderen Applikationen wie z.B. in Kombination mit Positionsbestimmungsgeräten, wie dem satellitenbasierten GPS (Global Positioning System) sinnvoll sein.

Bei mobilem Netzwerkzugriff via Internet Protokoll (IP) wird das IP dazu benutzt, die Datenpakete von der Quelladresse (Source Address) zur Zieladresse (Destination Address) im Netz mittels sog. IP-Adressen umzuleiten bzw. zu routen. Diese Adressen sind einem festen Standort im Netzwerk zugeordnet, ähnlich wie die Telefonnummern des Festnetzes einer physikalischen Dose zugeordnet sind. Wenn die Zieladresse der Datenpakete ein mobiler Node ist, bedeutet das, dass bei jedem Netzwerkstandortwechsel eine neue IP-Netzwerkadresse zugeordnet werden muss, was den transparenten, mobilen Zugriff verunmöglicht. Diese Probleme wurden durch den mobilen IP Standard (IETF RFC 2002, Okt. 1996 und RFC 3220, Jan. 2002) der Internet Engineering Task Force (IETF) gelöst, indem das mobile IP dem mobilen Node erlaubt, zwei IP-Adressen zu benutzen. Die eine davon ist die normale, statische IP-Adresse (Home-Address), die den Ort des Heimnetzes angibt, während die zweite eine dynamische IP-Adresse (Care-Of-Address) ist, die den aktuellen Standort des mobilen Nodes im Netz bezeichnet. Die Zuordnung der beiden Adressen erlaubt es, die IP-Datenpakete an die richtige, momentane Adresse des mobilen Nodes umzuleiten.

Das mobile IP der IETF löst jedoch nicht alle Probleme der mobilen Netzwerkbenutzung. Wie erwähnt kann es sinnvoll sein, bei mehreren verfügbaren Übertragungskanälen die Übertragungskanäle im mobilen Node basierend auf Datenübertragungsbandbreite, Kosten, Sicherheit etc. zu optimieren, da nicht alle Daten notwendigerweise die gleichen QoS Parameter benötigen. So kann z.B. zum Austausch von Sicherheitsparametem und/oder Konfigurationsparametern, wie z.B. Identifizierung oder Authentifizierung mittels Passwörtern, Schlüsseln zur Datenverschlüsselung, etc., die Sicherheit der Verbindung viel bedeutsamer sein als z.B. die Übertragungsrate. Hingegen kann bei der Übertragung von grossen Datenmengen wie z.B. bei Multimediadaten die Bandbreite eine grössere Rolle spielen als die Datensicherheit. Dies gilt insbesondere bei der Einrichtung von virtuellen privaten Kommunikationsnetzen. Virtuelle private Kommunikationsnetze ermöglichen die direkte Kommunikation zwischen Kommunikationspartnern (peer-to-peer), ohne dass unberechtigte Drittparteien dieser Kommunikation beitreten oder Daten der Kommunikation missbräuchlich benutzen können. Im Unterschied zu realen privaten Kommunikationsnetzen werden virtuelle private Kommunikationsnetze über geteilte Kommunikationsmedien aufgebaut und typischerweise mittels kryptographischer Mechanismen gegenüber unberechtigten Drittparteien gesichert. Geteilte Kommunikationsmedien umfassen vorwiegend elektromagnetische Wellen, insbesondere im Funkbereich oder im Infrarotbereich. Zur Sicherung der Datenkommunikation über geteilte Kommunikationsmedien sind dem Fachmann verschiedene kryptographische Mechanismen bekannt, zum Beispiel IPSec (Internet Protocol Security) und SSL (Secure Socket Layer) zum Erstellen von gesicherten Röhren, so genannten Secure Pipes. Bei der Sicherstellung der Authentizität eines Kommunikationspartners ergeben sich allerdings grössere Probleme, weil selbst die Verwendung von Passwörtern und/oder Benutzeridentifizierungen keine Gewähr bietet, dass diese vom berechtigten Benutzer übermittelt werden.

In der Patentschrift US 6,445,920 werden Vorrichtungen für den Aufbau bzw. für das Erstellen von virtuellen privaten Kommunikationsnetzen zwischen Kommunikationsendgeräten von Teilnehmern in Mobilfunknetzen beschrieben. Gemäss US 6,445,920 werden Teilnehmer des Mobilfunknetzes, die an einem gemeinsamen virtuellen privaten Kommunikationsnetz teilhaben möchten, in einer Benutzerdatenbank des Mobilfunknetzes, dem so genannten HLR (Home Location Register), mit einer diesbezüglichen speziellen zusätzlichen Kennung registriert. Beim Einbuchen eines Teilnehmers in das Mobilfunknetz wird gemäss US 6,445,920, wie im normierten GSM-Mobilfunknetz (Global System for Mobile Communication), eine Benutzeridentifizierung von einem Identifizierungsmodul im Kommunikationsendgerät des Teilnehmers an das Mobilfunknetz übermittelt und unter Verwendung eines kryptographischen Verfahrens zwischen dem Identifizierungsmodul und einer Zugangskontrolleinheit des Mobilfunknetzes authentifiziert. Teilnehmer, die im Mobilfunknetz mit der speziellen Kennung eines bestimmten virtuellen privaten Kommunikationsnetzes registriert sind, können sich gemäss US 6,445,920 im Mobilfunknetz gegenseitig unter Verwendung von registrierten Kurzwahtnummern anrufen und von reduzierten Kommunikationstarifen profitieren.

In der Patentschrift US 6,445,920 wird zwar das Problem der Authentifizierung der Teilnehmer durch die GSM-Authentifizierung der Benutzeridentifizierungen gelöst, US 6,445,920 liefert jedoch keinen Hinweis darauf, wie mehr als zwei Teilnehmer in einem virtuellen privaten Kommunikationsnetz gemeinsam kommunizieren können oder wie Teilnehmer in einem virtuellen privaten Kommunikationsnetz ausserhalb des Mobilfunknetzes miteinander kommunizieren können. Die Kommunikation zwischen mehreren Kommunikationsendgeräten in virtuellen privaten Kommunikationsnetzen ausserhalb von zellulären Mobilfunknetzen wird jedoch insbesondere mit der Verbreitung von Kommunikationsendgeräten, die mit Kommunikationsschnittstellen für geteilte Kommunikationsmedien ausgerüstet sind, immer wünschenswerter. Kommunikationsendgeräte werden immer häufiger mit Kommunikationsschnittstellen für lokale Kommunikationsnetze basierend auf verteilten Kommunikationsmedien ausgerüstet, beispielsweise WLAN-Module (Wireless Local Area Network), Funkgeräteschnittstellen wie Bluetooth, oder Infrarotgeräteschnittstellen wie IrDA (infrared Data Association).

In der Offenlegungsschrift WO 2004/006468 wird ein System zur Erstellung einer Kommunikationsverbindung zwischen einem ersten und einem zweiten Transceiver beschrieben. Das System umfasst einen Kommunikator zur Erstellung einer Kommunikation zwischen dem ersten und dem zweiten Transceiver über einen ersten Kanal, einen Determinator zur Bestimmung der Distanz zwischen den Transceiver und zur Bestimmung, ob die Distanz einen Threshold unterschreitet sowie einen Kanalcharger, um bei einer Positiven Bestimmung die direkte Kommunikation zwischen den Transceivern über einen zweiten Kanal zu erstellen.

In der Patentanmeldung EP 1 455 486 wird ein Verfahren zur Erstellung einer drahtlosen Verbindung zwischen zwei Kommunikationsgeräten beschrieben. In einem ersten Schritt sendet ein erstes Kommunikationsgerät ein Kommunikationssignal über eine erste drahtlose Schnittstelle an ein zweites Kommunikationsgerät und das erste Kommunikationsgerät aktiviert eine zweite drahtlose Schnittstelle. Das zweite Kommunikationsgerät empfängt das Kommunikationssignal über eine erste drahtlose-Schnittstelle und aktiviert eine der zweiten drahtlosen Schnittstellen des ersten Kommunikationsgerätes entsprechende zweite drahtlose Schnittstelle. Über die zweiten drahtlosen Schnittstellen wird anschliessend ein Kommunikationskanal zwischen den Kommunikationsgeräten erstellt.

In der Patentanmeldung EP 1 311 136 wird ein Verfahren zur Erstellung einer Anrufverbindung eines Benutzers zu einem zweiten Netzwerk beschrieben. Authentifizierungsdaten werden über ein authentifiziertes erstes Netzwerk dem Benutzerterminal zur Verfügung gestellt. Anrufverbindungen zu einem zweiten Netzwerk werden basierend auf diesen Authentifizierungsdaten freigegeben.

### Offenbarung der Erfindung

Es ist eine Aufgabe der vorliegenden Erfindung, ein neues Verfahren und ein neues System zum Erstellen einer optimierten Kommunikationsverbindung und/oder eines optimierten Kommunikationsnetzwerks zwischen mindestens zwei mobilen Netzwerknodes vorzuschlagen, welche nicht die Nachteile des Stands der Technik aufweisen. Das neue Verfahren und das neue System sollen insbesondere das Erstellen einer optimierten Kommunikationsverbindung und/oder eines optimierten Kommunikationsnetzwerks zwischen mobilen Netzwerknodes über ein geteiltes Kommunikationsmedium ausserhalb von zellulären Mobilfunknetzen ermöglichen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zum Erstellen einer optimierten Kommunikationsverbindung und/oder eines optimierten Kommunikationsnetzwerks zwischen mindestens zwei mobilen Netzwerknodes ein erstes und ein zweites Schnittstellenverwaltungsmodul eines ersten und zweiten mobilen Netzwerknodes den entsprechenden mobilen Netzwerknode nach verfügbaren Netzwerkschnittstellen überprüft und eine erste und eine zweite Lookup-Tabelle mit verfügbaren Netzwerkschnittstellen des entsprechenden mobilen Netzwerknodes erstellt, dass auf der ersten und/oder zweiten Lookup-Tabelle basierte erste und/oder zweite Konfigurationsdaten über einen ständig ansprechbaren Signalisierungskanal (sSC) zwischen den mobilen Netzwerknodes übertragen werden, wobei die Konfigurationsdaten mindestens Kommunikationsparameter und/oder Sicherheitsparameter umfassen, dass basierend auf den ersten und/oder zweiten Konfigurationsdaten mittels dem ersten und/oder dem zweiten Signalisierungsroutermodul mindestens ein Signalisierungskanal über eine der verfügbaren Netzwerkschnittstellen zum Übertragen von Konfigurationsdaten erstellt wird, und dass basierend auf den ersten und/oder zweiten Konfigurationsdaten mittels einem ersten und/oder zweiten Datenroutermodul mindestens ein Datenkanal über eine der verfügbaren Netzwerkschnittstellen erstellt wird. Insbesondere können die mobilen Netzwerknodes Netzwerkschnittstellen zu unterschiedlichen Netzen umfassen, wie z.B. Ethernet, Bluetooth, Mobilfunknetze (GSM: Global System for Mobile Communication, UMTS: Universal Mobile Telephone System etc.) oder WLAN (Wireless Local Area Network). Ein Vorteil der Erfindung ist, dass mittels geeigneter Netzwerkschnittstellen an spezifische Erfordernisse angepasste und somit optimierte Signalisierungskanäle als auch Datenkanäle konfigurierbar sind. Der ständig ansprechbare Signalisierungskanal kann beispielsweise auf einem GSM Netzwerk basieren. Durch das Erstellen des mindestens einen Signalisierungskanals kann beispielsweise der ständig ansprechbare Signalisierungskanal sofort wieder entlastet werden. Spezifische Erfordernisse bzw. Optimierungen können beispielsweise die Bandbreite eines Kanals und/oder die Kosten eines Kanals betreffen. Optimierungen können beispielsweise benutzerspezifisch und/oder benutzerkontrolliert und/oder automatisiert für die entsprechenden Parameter allgemein oder einzeln berücksichtigt werden. Dies war im Stand der Technik so in keiner Weise möglich.

In einer Ausführungsvariante werden für das Erstellen des mindestens einen Signalisierungskanals und/oder des mindestens einen Datenkanals unterschiedliche Netzwerkschnittstellen verwendet. Eine solche Ausführungsvariante hat insbesondere den Vorteil, dass der mindestens eine Signalisierungs- und/oder der mindestens eine Datenkanal über eine besonders geeignete Netzwerkschnittstelle, wie beispielsweise eine Netzwerkschnittstelle mit geeigneten Authentifizierungsmechanismen und/oder eine Netzwerkschnittstelle mit einer geeigneten Datenkapazität, aufgebaut werden kann.

In einer Ausführungsvariante werden mehrere Signalisierungskanäle und/oder mehrere Datenkanäle aufgebaut, wobei den einzelnen Signalisierungs- und/oder Datenkanälen unterschiedliche Netzwerkschnittstellen und/oder unterschiedliche Kommunikationsparameter und/oder Sicherheitsparameter zuordenbar sind. Eine solche Ausführungsvariante hat insbesondere den Vorteil, dass Signalisierungs- und/oder Datenkanäle redundant über verschiedene Netzwerkschnittstellen erstellbar sind und somit beispielsweise bei sich bewegenden mobilen Netzwerknodes eine stark erhöhte Datenübertragungssicherheit erreichbar ist. Eine solche Ausführungsvariante hat auch den Vorteil, dass z.B. Datendurchsatz und/oder Sicherheit etc. durch die Verwendung von parallelen Signalisierungskanälen und/oder parallelen Datenkanälen weiter optimiert werden kann.

In einer weiteren Ausführungsvariante werden die mobilen Netzwerknodes vom entsprechenden Schnittstellenverwaltungsmodul zu bestimmbaren Zeitpunkten nach verfügbaren Netzwerkschnittstellen überprüft, wobei die entsprechenden Lookup-Tabellen aktualisiert werden. Diese Ausführungsvariante hat den Vorteil, dass Lookup-Tabellen stets auf dem aktuellsten Stand gehalten werden und sofort gemäss diesem aktuellen Stand verfügbar sind. Insbesondere kann durch ein ständiges Monitoring der Netzwerkschnittstellen und ihrer Eigenschaften z.B. automatisch zwischen Netzwerkschnittstellen gewechselt werden, falls Netzwerkschnittstellen mit besseren Eigenschaften als die der momentan aktiven Netzwerkschnittstelle verfügbar werden. Als Ausführungsvariante ist es auch möglich, dass sich die Kriterien für den automatischen Wechsel der Schnittstelle durch den Benutzer und/oder den Netzwerkoperator bestimmen lassen. Dies hat u.a. den Vorteil, dass der Benutzer und/oder Netzwerkoperator sehr individuell entsprechend spezifischen Bedürfnissen Schnittstellen konfigurieren kann.

In einer weiteren Ausführungsvariante werden Konfigurationsdaten periodisch und/oder zu bestimmbaren Zeitpunkten und/oder bei einer Änderung einer Lookup-Tabelle übermittelt und es werden basierend auf den übermittelten Konfigurationsdaten der mindestens eine Signalisierungskanal und/oder der mindestens eine Datenkanal dynamisch angepasst und/oder dynamisch gewechselt. Die Anpassung und/oder der Wechsel können wiederum als Ausführungsvariante auch anhand von durch den Benutzer festlegbare Kriterien automatisch geschehen. Dies hat den Vorteil, dass der mobile Netzwerknode automatisch, je nach definierten Kriterien, stets die Schnittstelle mit z.B. dem momentan grössten verfügbaren Datendurchsatz und/oder mit dem besten Preis-Leistungsverhältnis und/oder der höchsten Sicherheit etc. für den Signalisierungskanal bzw. den Datenkanal benutzt. Insbesondere können Netzwerkschnittstellen auch dynamisch konfiguriert werden. Dies hat u.a. den Vorteil, dass z.B. eventuell vorhandene Services, wie z.B. ein DHCP (Dynamic Host Configuration Protocol) Service, genutzt werden können und die Handhabung für den Benutzer durch die Automatisierung der Konfiguration vereinfacht wird.

In einer anderen Ausführungsvariante werden die Konfigurationsdaten unidirektional und/oder bidirektional zwischen einem ersten mobilen Netzwerknode und einem zweiten mobilen Netzwerknode übertragen. Die bidirektionale Übertragung hat für bestimmte Anwendungen den Vorteil, dass bei Unterbruch einer Datenverbindung die Verbindung schneller wieder aufgebaut werden kann. Z.B. können die Konfigurationsdaten auch beidseitig gespeichert werden, wobei auch bei einem längeren Unterbruch die Verbindung basierend auf den gespeicherten Konfigurationsdaten und nicht z.B. über den ständig verfügbaren Signalisierungskanal wieder aufgebaut wird. Die unidirektionale Übertragung hat dagegen u.a. den Vorteil, dass stets nur einer der mobilen Netzwerknodes (z.B. Master) die Datenverbindung bestimmen muss.

In einer Ausführungsvariante führt eines der Datenroutermodule und/oder eines der Signalisierungsroutermodule als Master-Datenroutermodul und/oder als Master-Signalisierungsroutermodul die Koordination des Erstellens des mindestens einen Datenkanals und/oder Signalisierungskanals durch. Diese Ausführungsvariante hat insbesondere den Vorteil, dass eine einzige Instanz das Erstellen von Verbindungen besonders effizient gestalten kann.

In einer anderen Ausführungsvariante umfassen die Konfigurationsdaten Parameter zur Bestimmung der Datensicherheit und/oder der Zuverlässigkeit und/oder der minimalen Durchsatzrate und/oder der Identifikation und/oder des Pagings und/oder der Authentifizierung des mindestens einen Signalisierungskanals und/oder des mindestens einen Datenkanals. Diese Ausführungsvariante hat u.a. den Vorteil, dass Netzwerkverbindungen bezüglich weiterer Kriterien optimierbar sind.

In einer weiteren Ausführungsvariante werden die verfügbaren Netzwerkschnittstellen mindestens teilweise dynamisch konfiguriert. Dies hat wie oben u.a. den Vorteil, dass eventuell vorhandene Services, wie z.B. ein DHCP (Dynamic Host Configuration Protocol) Service, genutzt werden können und die Handhabung für den Benutzer durch die Automatisierung der Konfiguration vereinfacht wird.

In einer wieder anderen Ausführungsvariante werden die verfügbaren Netzwerkschnittstellen mindestens teilweise statisch konfiguriert. Dies hat u.a. den Vorteil, dass die Konfiguration der Netzwerkschnittstellen für den Benutzer stets kontrollierbar und/oder überblickbar ist.

Bei allen oben genannten Ausführungsvarianten ist es in einer zusätzlichen Ausführungsvariante möglich, ausgehende Datenpakete in einem Datenbuffer des mobilen Netzwerknodes zu buffern, falls die Netzanbindung des mobilen Netzwerknodes unterbrochen wird, so dass die Outputdatenrate von einer oder mehreren Applikationen mittels des Datenbuffers aufrechterhalten oder innerhalb einer bestimmten Schwankungstoleranz gehalten wird. Der Vorteil dieser Ausführungsvariante ist u.a., dass bei einem Wechsel der physikalischen Schnittstelle damit die Outputdatenrate z.B. einer IP-Applikation konstant bzw. innerhalb einer vorgegebenen Schwankungstoleranz gehalten werden kann, solange die Speicherkapazität des Datenbuffers zum Speichern der ausgehenden Datenpakete ausreicht. Dies hat wiederum den Vorteil, dass bei einem Unterbruch der Netzanbindung die Datendurchsatzrate durch die Applikationen oder den Kernel nicht heruntergefahren wird.

An dieser Stelle soll festgehalten werden, dass sich die vorliegende Erfindung neben dem erfindungsgemässen Verfahren auch auf ein System zur Ausführung dieses Verfahrens bezieht.

### Kurze Beschreibung der Zeichnungen

Nachfolgend werden Ausführungsvarianten der vorliegenden Erfindung anhand von Beispielen beschrieben. Die Beispiele der Ausführungen werden durch folgende beigelegte Figuren illustriert:

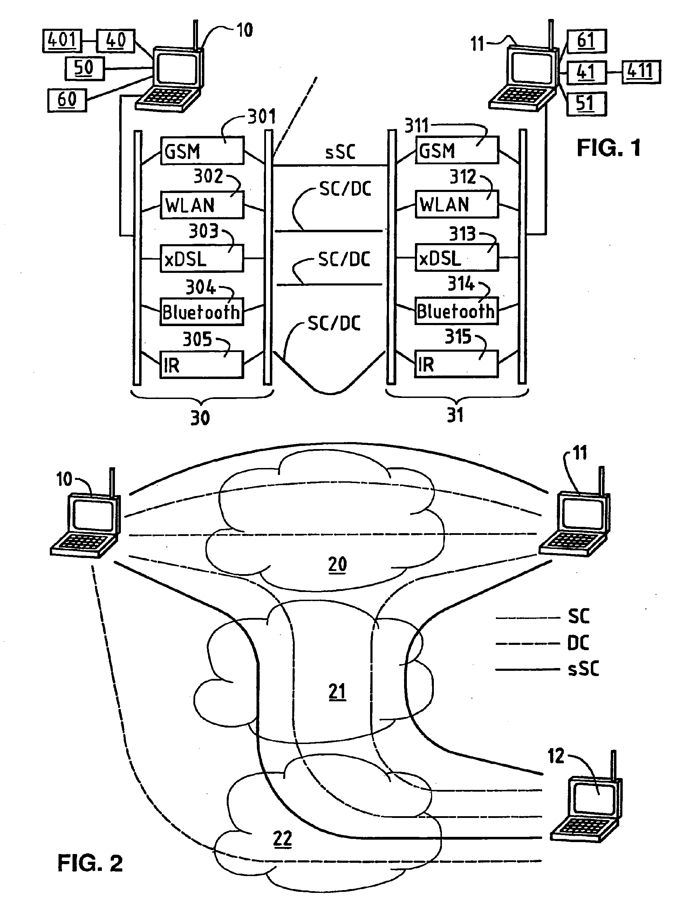

Figur 1 zeigt ein Blockdiagramm, welches schematisch ein Verfahren und ein System zum Erstellen einer optimierten Kommunikationsverbindung und/oder eines optimierten Kommunikationsnetzwerkes zwischen zwei und/oder mehreren mobilen Netzwerknodes 10,11 illustriert. Dabei werden der mindestens eine Signalisierungskanal und der mindestens eine Datenkanal separat aufgebaut und optimiert.
Figur 2 zeigt ein Blockdiagramm, welches ein Verfahren und ein System zum Erstellen einer optimierten Kommunikationsverbindung und/oder eines optimierten Kommunikationsnetzwerkes zwischen zwei und/oder mehreren mobilen Netzwerknodes 10, 11, 12,... illustriert. Das Bezugszeichen sSC gibt dabei den ständig verfügbaren Signalisierungskanal an, das Bezugszeichen SC gibt den mindestens einen Signalisierungskanal an und das Bezugszeichen DC gibt den mindestens einen Datenkanal an.

### Ausführungsform(en) der Erfindung

Figur 1 und Figur 2 illustrieren eine Architektur, die zur Realisierung der Erfindung verwendet werden kann. In der Figur 2 bezieht sich das Bezugszeichen sSC auf einen ständig verfügbaren Signalisierungskanal, das Bezugszeichen SC bezieht sich auf einen Signalisierungskanal und das Bezugszeichen DC auf einen Datenkanal. Die mobilen Netzwerknodes 10, 11, 12,... verfügen dabei über die notwendige Infrastruktur, einschliesslich Hardware- und Softwarekomponenten, um ein beschriebenes erfindungsgemässes Verfahren und/oder System zu realisieren, insbesondere um die Verbindungen zu den Netzwerken 20, 21, 22,... über die vorhandenen Schnittstellen aufzubauen. Unter mobilen Netzwerknodes 10, 11, 12... sind u.a. alle möglichen sog. Customer Premise Equipment (CPE) zu verstehen, die zur Benutzung an verschiedenen Netzwerkstandorten und/oder mit verschiedenen Netzwerken vorgesehen sind, wie beispielsweise tragbare Computer, PDAs (Personal Digital Assistant), Mobilfunkendgeräte, Desktop Personal Computer, Serversysteme oder irgendein anderes CPE. Die mobilen CPEs oder Netzwerknodes 10, 11, 12,... können ein oder mehrere verschiedene Netzwerkschnittstellen 30,31 besitzen, die auch mehrere unterschiedliche Netzwerkstandards 301, 302, 303,... bzw. 311, 312, 313,... unterstützen können. Die Netzwerkschnittstellen 30,31 eines mobilen Netzwerknodes 10, 11, 12,.., können z.B. Schnittstellen zu Ethernet oder einem anderen Wired LAN (Local Area Network), Bluetooth 304,314, GSM (Global System for Mobile Communication) 301,311, GPRS (Generalized Packet Radio Service), USSD (Unstructured Supplementary Services Data), UMTS (Universal Mobile Telecommunications System) und/oder WLAN (Wireless Local Area Network) 302, 312, xDSL (Digital Subscriber Line) 303,313, IR (InfraRed) 305,315 etc. umfassen. Die Netzwerkschnittstellen 30,31 können aber auch direkte Netzwerkverbindungen zwischen Netzwerkendgeräten wie beispielsweise Netzwerkverbindungen basierend auf einer WLAN Verbindung im Adhoc Modus, UWB (Ultra Wide Band) oder ZigBee Verbindungen (IEEE Standard 802.15.x), IrDA (Infrared Data Association) Verbindungen oder irgendeine andere direkte Netzwerkverbindung umfassen. Die Referenznummern 20, 21, 22,... stehen dementsprechend für die verschiedenen heterogenen Netzwerke, wie z.B. einem Wired LAN, d.h. einem lokalen Festnetz, insbesondere auch dem PSTN (Public Switched Telephone Network) etc., einem Bluetooth-Netzwerk, z.B. für Installationen in überdachten Örtlichkeiten, ein Mobilfunknetz mit GSM und/oder UMTS etc. oder einem Wireless LAN. Die Schnittstellen 30,31 können nicht nur packet-switched Schnittstellen, wie sie von Netzwerkprotokollen wie z.B. Ethernet oder Tokenring direkt benutzt werden, sondern auch circuit-switched Schnittstellen, die mittels Protokollen, wie z.B. PPP (Point to Point Protocol), SLIP (Serial Line Internet Protocol) oder GPRS (Generalized Packet Radio Service) benutzt werden können, d.h. welche Schnittstellen z.B. keine Netzwerkadresse, wie eine MAC- oder eine DLC-Adresse besitzen. Die Referenznummer 20 kann z.B. das gewohnte, weltweite IP-Backbone-Netzwerk bezeichnen. Wie erwähnt, kann die Kommunikation z.B. auch über ein Mobilfunknetz 21 wie GSM oder UMTS erfolgen, beispielsweise auch mittels speziellen Kurzmeldungen, z.B. SMS (Short Message Services), EMS (Enhanced Message Services), über einen Signalisierungskanal, wie z.B. USSD (Unstructured Supplementary Services Data) oder andere Techniken, wie MExE (Mobile Execution Environment), GPRS (Generalized Packet Radio Service), WAP (Wireless Application Protocol) oder UMTS (Universal Mobile Telecommunications System) oder über einen Nutzkanal.

Zum Erstellen einer Kommunikationsverbindung SC/DC und/oder eines Kommunikationsnetzwerkes SC/DC zwischen mobilen Netzwerknodes 10,11,12,... überprüft ein entsprechendes Schnittstellenverwaltungsmodul 40,41 den mobilen Netzwerknode 10, 11, 12,.. nach verfügbaren Netzwerkschnittstellen 30,31 und erstellt eine Lookup-Tabelle 401,411 mit verfügbaren Netzwerk schnittstellen 30,31. Wie erwähnt werden die Netzwerkschnittstellen 30,31 durch ein Schnittstellenverwaltungsmodul 40,41 verwaltet. Die Netzwerkschnittstellen 30,31 können physikalische Schnittstellen sein oder z.B. durch das Schnittstellenverwaltungsmodul 40,41 softwaremässig generierte Netzwerkschnittstellen, d.h. virtuelle Schnittstellen sein. Das Schnittstellenverwaltungsmodul 40,41 bindet sich beispielsweise nach der Überprüfung des mobilen Nodes 10,11,21 nach verfügbaren Netzwerkschnittstellen an eine der verfügbaren Netzwerkschnittstellen 30,31 an. Die Überprüfung der Netzwerkschnittstellen 30,31 kann z.B. zu bestimmbaren Zeitpunkten oder periodisch, d.h. nach Ablauf eines bestimmbaren Zeitfensters, geschehen. Die Überprüfung kann manuell konfigurierbar sein oder auf Request beispielsweise eines Kernels des mobilen Netzwerknodes 10,11,12 erfolgen. Die Lookup-Tabelle 401,411 kann insbesondere Informationen, wie mögliche Datendurchsatzrate, Netzverfügbarkeit, Netzstabilität, Kosten der Netzbenutzung, Datendurchsatzrate, QoS (Quality of Service), etc. umfassen. Die Anbindung an eine bestimmte Schnittstelle 30,31 kann anhand bestimmbarer Kriterien der in der Lookup-Tabelle gespeicherten Informationen erfolgen. Insbesondere kann es sinnvoll sein, dass das Schnittstellenverwaltungsmodul 40,41 die Schnittstelle 30,31 automatisch basierend auf Informationen der Lookup-Tabelle wechselt und aktualisiert. Die Anbindung an eine bestimmte Schnittstelle 30,31 kann aber auch z.B. durch den Benutzer bestimmbar sein und/oder manuell erfolgen. Die verfügbaren Netzwerkschnittstellen 30,31 können dynamisch konfiguriert werden, z.B. mittels einem DHCP-Service (DHCP: Dynamic Host Configuration Protocol), falls solche Mittel verfügbar sind, oder statisch, z.B. durch den Benutzer oder anhand vorgegebener Konfigurationsprofile. Über eine aktuelle Netzwerkschnittstelle können z.B. ein oder mehrere Applikationen des mobilen Netzwerknodes 10, 11, 12,... auf die heterogenen Netzwerke 21, 21, 22,... zugreifen.

Konfigurationsdaten mit Kommunikationsparametem und/oder Sicherheitsparametern, welche auf in der Lookup-Tabelle gespeicherten Informationen basieren, werden über einen ständig verfügbaren Signalisierungskanal sSC zwischen den mobilen Netzwerknodes übermittelt. Der ständig verfügbare Signalisierungskanal ist irgendein geeigneter Kommunikationskanal, beispielsweise basiert der ständig verfügbare Signalisierungskanal auf einem GSM-Mobilfunknetz oder irgendeinem anderen geeigneten Kommunikationsnetzwerk. Basierend auf Kommunikationsparametern und/oder Sicherheitsparametem wird mittels eines Signalisierungsroutermoduls 60,61 ein Signalisierungskanal SC sowie mittels eines Datenroutermoduls 60,61 ein Datenkanal DC zwischen dem ersten mobilen Netzwerknode 10 und dem zweiten mobilen Netzwerknode 11 aufgebaut. Der Signalisierungskanal SC dient beispielsweise dazu, um den ständig verfügbaren Signalisierungskanal sSC zu entlasten und für andere Anwendungen und/oder Netzwerknodes freizugeben. Wie insbesondere aus Figuren 1 und 2 hervorgeht, können der Signalisierungskanal SC und der Datenkanal DC basierend auf unterschiedlichen Kriterien über unterschiedliche Netzwerkschnittstellen 30,31 und Netzwerkstandarte 301,302,303,304,305,... und 311,312,313,314,315,... aufgebaut werden. Natürlich ist es klar, dass, falls die Kriterien sinnvoll sind, der Signalisierungskanal SC und der Datenkanal DC über die gleiche Netzanbindung erfolgen kann. Wechselt der mobile Netzwerknode 10,11,12 die Netzwerkschnittstelle 30,31 oder seinen topologischen Standort im Netz, kann die Anbindung an die Netzwerkschnittstelle 30,31 basierend auf den Informationen der Lookup-Tabelle über das Schnittstellenverwaltungsmodul 40,41 aktualisiert werden. Für den Datenkanal DC und/oder den Signalisierungskanal SC kann z.B. ein Mobile IP-Modul bei einem Wechsel der Netzwerkschnittstelle 30,31 die Verwaltung der IP-Adressen übernehmen. Ebenso kann ein IPseo-Modul z.B. eine IPsec-Datentunnelkonfiguration gemäss der aktuellen Netzanbindung aktualisieren, worauf das Mobile IP-Modul die neue Care-of-Adresse beim Home-Agenten registriert, so dass das Routing der Datenpakete zum neuen Standort bzw. zur neuen Netzwerkanbindung des mobilen Netzwerknodes 10,11,12,... stattfindet und aktualisiert die IP-Konfiguration, falls notwendig, beim Home-Agenten entsprechend der momentanen aktuellen Netzwerkschnittstelle oder Netzwerkschnittstellen. Die oben genannte Reihenfolge ist erfindungsgemäss, der Ablauf kann aber auch in umgekehrter Folge stattfinden.

Zum Aufbauen bzw. zum Erstellen des Signalisierungs- und/oder Datenkanals SC/DC können z.B. Konfigurationsdaten mit Kommunikationsparametem und/oder mit Sicherheitsparametern basierend auf der ersten und/oder zweiten Lookup-Tabelle 401,411 zwischen den mobilen Netzwerknodes 10,11,12,... übertragen werden. Die Konfigurationsdaten können je nach Ausführungsvariante z.B. unidirektional oder bidirektional zwischen einem ersten mobilen Netzwerknode 10 und dem zweiten mobilen Netzwerknode 11 übertragen werden. Wie oben beschrieben kann z.B. das entsprechende Schnittstellenverwaltungsmodul 40,41 den ersten und/oder den zweiten mobilen Netzwerknode 10,11 nach verfügbaren Netzwerkschnittstellen 30,31 periodisch überprüfen und die jeweilige Lookup-Tabelle 401,411 aktualisieren. Ebenso kann z.B. mittels des Signalisierungsroutermoduls 50,51 basierend auf der ersten und/oder zweiten Lookup-Tabelle 401,411 und/oder auf den Kommunikationsparametern der Signalisierungskanal SC dynamisch angepasst und/oder gewechselt werden.

Es ist wichtig, darauf hinzuweisen, dass gemäss der Erfindung auch z.B. weitere Signalisierungskanäle SC basierend auf der ersten und/oder zweiten Lookup-Tabelle 401,411 und/oder auf den Konfigurationsdaten aufgebaut werden können. Die einzelnen Signalisierungskanäle SC können dabei unterschiedliche Kommunikationsparametem und/oder Sicherheitsparametem zugeordnet sein. Die Konfigurationsdaten können periodisch und/oder bei Änderung der Lookup-Tabelle 401,411 übermittelt werden und basierend auf den übermittelten Konfigurationsdaten die ein oder mehreren Signalisierungskanäle SC und/oder ein oder mehreren Datenkanäle DC dynamisch geroutet werden. Beide mobilen Netzwerknodes 10,11 können einen Fallbacksignalisierungskanal umfassen, wobei der Fallbacksignalisierungskanal bei Unterbrechung von einem oder mehreren Signalisierungskanälen SC als temporärer Signalisierungskanal SC verwendet wird. Die Konfigurationsdaten können weiter z.B. Parameter zur Bestimmung der Datensicherheit und/oder der Zuverlässigkeit und/oder der minimalen Durchsatzrate und/oder der Identifikation und/oder des Paging und/oder der Authentifizierung eines Signalisierungskanals SC umfassen. Die verfügbaren Netzwerkschnittstellen 30,31 können einseitig oder beidseitig mindestens teilweise dynamisch und/oder statisch konfiguriert werden.

Es bleibt zu erwähnen, dass in einem erweiterten Ausführungsbeispiel zum oben genannten Ausführungsbeispiel ausgehende Datenpakete in einem Datenbuffer des mobilen Netzwerknodes 10,11,12 gepuffert werden, falls die Netzanbindung des mobilen Netzwerknodes 10,11,12 unterbrochen wird, so dass die Outputdatenrate von z.B. zur Zeit angebundenen IP-Applikationen mittels des Datenbuffers aufrechterhalten oder innerhalb einer bestimmten Schwankungstoleranz gehalten wird, d.h. solange die Speicherkapazität des Datenbuffers zum Speichern der Datenpakete ausreicht. Falls der Netzwerkanbindungsunterbruch so innerhalb des z.B. im TCP vorgesehenen Zeitfensters für ein Verbindungs-Timeout liegt, kann die Outputdatenrate z.B. für IP-Applikationen so gehalten werden, dass keine automatische Verzögerung der Outputrate durch die IP-Applikationen stattfindet. Die Speicherung der Datenpakete kann z.B. kontinuierlich gleich oder gemäss der Zeitdauer des Unterbruchs stetig langsamer stattfinden. Es ist darauf hinzuweisen, dass gerade bei Realtime-Applikationen der Datenbuffer eine wichtige Rolle spielen kann, um bei einem Wechsel des topologischen Netzwerkstandortes Unterbrüche und Datenverlust zu minimieren. Der Datenbuffer kann in einem Ausführungsbeispiel hardware- oder softwaremässig einer Netzwerkschnittstelle 30,31 zugeordnet oder integriert realisiert sein, er kann aber auch separat im mobilen Netzwerknode 10,11 realisiert sein.

Es ist als Ausführungsvariante möglich, dass der mobile Netzwerknode 10,11 über zwei oder mehrere Netzwerkschnittstellen 30,31 gleichzeitig das gleiche Datenpaket erhalten kann. Dies gilt sowohl für den Signalisierungskanal SC als auch für den Datenkanal DC. Redundante Datenpakete werden in höheren Layern dann automatisch erkannt und entsprechend reduziert. Durch das gleichzeitige Verschicken von Datenpaketen und das parallele Erhalten der gleichen Datenpakete durch zwei unterschiedliche Netzwerkschnittstellen 30,31 kann z.B. der nahtlose Übergang von einer Schnittstelle 30,31 zu einer anderen durch den mobilen Node 10 gewährleistet werden. Bei Verwendung von Mobile IP können beispielsweise beim Signalisierungskanal SC und/oder beim Datenkanal DC für einen mobilen Node 10 mindestens zwei Care-of-Adressen entsprechend den momentan angebundenen aktuellen Netzwerkschnittstellen 30,31 zugeordnet sein. Sind mehr als zwei Netzwerkschnittstellen 30,31 gleichzeitig angebunden, erhöht sich die Anzahl zugeordneter Care-of-Adressen entsprechend. Der Home-Agent routet die IP-Datenpakete, welche die Home-Adresse des mobilen Nodes 10 im IP-Header besitzen, entsprechend der genannten Mehrfach-Registrierung parallel an die verschiedenen registrierten Care-of-Adressen, d.h. an verschiedene Netzwerkschnittstellen des mobilen Netzwerknodes 10,11,12.

## Patentansprüche

1. Verfahren zum Erstellen einer optimierten Kommunikationsverbindung (SC/DC) und/oder eines optimierten Kommunikationsnetzwerks (SC/DC) zwischen mindestens zwei mobilen Netzwerknodes (10, 11), **dadurch gekennzeichnet,**
**dass** ein erstes und ein zweites Schnittstellenverwaltungsmodul (40, 41) eines ersten und zweiten mobilen Netzwerknodes (10, 11) den entsprechenden mobilen Netzwerknode nach verfügbaren Netzwerkschnittstellen (30, 31) überprüft und eine erste und eine zweite Lookup-Tabelle (401, 411) mit verfügbaren Netzwerkschnittstellen (30, 31) des entsprechenden mobilen Netzwerknodes (10, 11) erstellt,
**dass** auf der ersten und/oder zweiten Lookup-Tabelle basierende erste und/oder zweite Konfigurationsdaten über einen ständig ansprechbaren Signalisierungskanal (sSC) zwischen den mobilen Netzwerknodes (10, 11) übertragen werden, wobei die Konfigurationsdaten mindestens Kommunikationsparameter und/oder Sicherheitsparameter umfassen,
**dass** basierend auf den ersten und/oder zweiten Konfigurationsdaten mittels eines ersten und/oder zweiten Signalisierungsroutermodul (50, 51) mindestens ein Signalisierungskanal (SC) über eine der verfügbaren Netzwerkschnittstellen (30, 31) zum Übertragen von Konfigurationsdaten erstellt wird, und
**dass** basierend auf den ersten und/oder zweiten Konfigurationsdaten mittels eines ersten und/oder zweiten Datenroutermodul (60, 61) mindestens ein Datenkanal (DC) über eine der verfügbaren Netzwerkschnittstellen (30, 31) erstellt wird.

2. Verfahren nach Anspruch 1, **dadurch gekennzeichnet, dass** für den Aufbau des mindestens einen Signalisierungskanals (SC) und/oder für den Aufbau des mindestens einen Datenkanals (DC) unterschiedliche Netzwerkschnittstellen (30, 31) verwendet werden.

3. Verfahren nach einem der Ansprüche 1 bis 2, **dadurch gekennzeichnet, dass** mehrere Signalisierungskanäle (SC) und/oder mehrere Datenkanäle (DC) aufgebaut werden, wobei den einzelnen Signalisierungskanälen (SC) und/oder den einzelnen Datenkanälen (DC) unterschiedliche Netzwerkschnittstellen (30, 31) und/oder Kommunikationsparameter und/oder Sicherheitsparameter zuordenbar sind.

4. Verfahren nach einem der Ansprüche 1 bis 3, **dadurch gekennzeichnet, dass** das erste und/oder das zweite Schnittstellenverwaltungsmodul (40, 41) den entsprechenden mobilen Netzwerknode (10, 11) zu bestimmbaren Zeitpunkten nach verfügbaren Netzwerkschnittstellen (30, 31) überprüft und die entsprechende Lookup-Tabelle (401, 411) aktualisiert.

5. Verfahren nach einem der Ansprüche 1 bis 4, **dadurch gekennzeichnet, dass** erste und/oder zweite Konfigurationsdaten zu bestimmbaren Zeitpunkten und/oder bei einer Änderung einer Lookup-Tabelle (401, 411) zwischen den mobilen Netzwerknodes (10, 11) übermittelt werden und dass basierend auf den übermittelten Konfigurationsdaten der mindestens eine Signalisierungskanal (SC) und/oder der mindestens eine Datenkanal (DC) dynamisch angepasst und/oder dynamisch gewechselt werden.

6. Verfahren nach einem der Ansprüche 1 bis 5, **dadurch gekennzeichnet, dass** Konfigurationsdaten unidirektional zwischen mobilen Netzwerknodes (10, 11) übertragen werden.

7. Verfahren nach einem der Ansprüche 1 bis 5, **dadurch gekennzeichnet, dass** Konfigurationsdaten bidirektional zwischen mobilen Netzwerknodes (10, 11) übertragen werden.

8. Verfahren nach einem der Ansprüche 1 bis 7, **dadurch gekennzeichnet, dass** eines der Signalisierungsroutermodule (50, 51) als Master-Signalisierungsroutermodul die Koordination des Erstellens des mindestens einen Signalisierungskanals (SC) durchführt.

9. Verfahren nach einem der Ansprüche 1 bis 8, **dadurch gekennzeichnet, dass** eines der Datenroutermodule (60, 61) als Master-Datenroutermodul die Koordination des Erstellens des mindestens einen Datenkanals (DC) durchführt.

10. Verfahren nach einem der Ansprüche 1 bis 9, **dadurch gekennzeichnet, dass** die Konfigurationsdaten Parameter zur Bestimmung der Datensicherheit und/oder der Zuverlässigkeit und/oder der minimalen Durchsatzrate und/oder der Identifikation und/oder des Pagings und/oder der Authentifizierung des mindestens einen Signalisierungskanals (SC) und/oder des mindestens einen Datenkanals (DC) umfassen.

11. Verfahren nach einem der Ansprüche 1 bis 10, **dadurch gekennzeichnet, dass** Netzwerkschnittstellen (30, 31) mindestens teilweise dynamisch konfiguriert werden.

12. Verfahren nach einem der Ansprüche 1 bis 11, **dadurch gekennzeichnet, dass** Netzwerkschnittstellen (30, 31) mindestens teilweise statisch konfiguriert werden.

13. Verfahren nach einem der Ansprüche 1 bis 12, **dadurch gekennzeichnet, dass** ausgehende Datenpakete in einem Datenbuffer des mobilen Netzwerknodes (10, 11) gepuffert werden, falls die Netzanbindung des mobilen Netzwerknodes (10, 11) unterbrochen wird, so dass die Outputdatenrate von angebundenen Applikationen mittels des Datenbuffers aufrechterhalten oder innerhalb einer bestimmten Schwankungstoleranz gehalten wird.

14. System zum Erstellen einer optimierten Kommünikationsverbindung (SC/DC) und/oder eines optimierten Kommunikationsnetzwerks (SC/DC) zwischen mindestens zwei mobilen Netzwerknodes (10, 11), **dadurch gekennzeichnet,**
**dass** ein erster und ein zweiter mobiler Netzwerknode (10, 11) ein erstes und zweites Schnittstellenverwaltungsmodul (40, 41) umfassen, wobei das erste und das zweite Schnittstellenverwaltungsmodul (40, 41) Mittel zum Überprüfen des entsprechenden mobilen Netzwerknodes (10, 11) nach verfügbaren Netzwerkschnittstellen (30, 31) und ein entsprechendes Speichermodul mit einer ersten und einer zweiten Lookup-Tabelle (401, 411) zum Speichern von Daten betreffend der verfügbaren Netzwerkschnittstellen (30, 31) umfassen,
**dass** auf der ersten und/oder zweiten Lookup-Tabelle (401, 411) basierte erste und zweite Konfigurationsdaten mit Kommunikationsparametern und/oder Sicherheitsparametern über einen ständig ansprechbaren Signalisierungskanal (sSC) zwischen den mobilen Netzwerknodes übertragbar sind,
**dass** der erste und der zweite mobile Netzwerknode (10, 11) ein erstes und zweites Signalisierungsroutermodul (50, 51) umfassen, wobei mittels des ersten und/oder des zweiten Signalisierungsroutermoduls (50, 51) basierend auf ersten und/oder zweiten Konfigurationsdaten mindestens ein Signalisierungskanal (SC) zur Übertragung von Konfigurationsdaten über eine der verfügbaren Netzwerkschnittstellen (30, 31) erstellbar ist, und
**dass** der erste und der zweite mobile Netzwerknode (10, 11) ein erstes und zweites Datenroutermodul (60, 61) umfassen, wobei mittels des ersten und/oder des zweiten Datenroutermoduls (60, 61) basierend auf ersten und/oder zweiten Konfigurationsdaten mindestens ein Datenkanal (DC) über eine der verfügbaren Netzwerkschnittstellen (30, 31) erstellbar ist.

15. System nach Anspruch 14, **dadurch gekennzeichnet, dass** für das Erstellen des mindestens einen Signalisierungskanals (SC) und/oder für das Erstellen des mindestens einen Datenkanals (DC) unterschiedliche Netzwerkschnittstellen (30, 31) verwendbar sind.

16. System nach einem der Ansprüche 14 bis 15, **dadurch gekennzeichnet, dass** mehrere Signalisierungskanäle (SC) und/oder mehrere Datenkanäle (DC) erstellbar sind, wobei den einzelnen Signalisierungskanälen (SC) und/oder den einzelnen Datenkanälen (DC) unterschiedliche Kommunikationsparameter und/oder Sicherheitsparameter zuordenbar sind.

17. System nach einem der Ansprüche 14 bis 16, **dadurch gekennzeichnet, dass** mittels des entsprechenden Schnittstellenverwaltungsmoduls (40,41) der erste und/oder der zweite mobile Netzwerknode (10,11) zu bestimmbaren Zeitpunkten nach verfügbaren Netzwerkschnittstellen (30,31) überprüfbar ist, wobei die entsprechende Lookup-Tabelle (401,411) aktualisierbar ist.

18. System nach einem der Ansprüche 14 bis 17, **dadurch gekennzeichnet, dass** erste und/oder zweite Konfigurationsdaten zu bestimmbaren Zeitpunkten und/oder bei einer Änderung der entsprechenden Lookup-Tabelle (401, 411) zwischen den mobilen Netzwerknodes (10, 11) übertragbar sind, wobei basierend auf den übermittelten Konfigurationsdaten der mindestens eine Signalisierungskanal (SC) und/oder der mindestens eine Datenkanal (DC) dynamisch anpassbar und/oder dynamisch wechselbar ist.

19. System nach einem der Ansprüche 14 bis 18, **dadurch gekennzeichnet, dass** das Erstellen des mindestens einen Signalisierungskanals (SC) und/oder des mindestens einen Datenkanals (DC) von einem der Signalisierungsroutermodule (50, 51) und/oder einem der Datenroutermodule (60, 61) als Master-Signalisierungsroutermodul und/oder als Master-Datenroutermodul koordinierbar ist.

## Claims

1. Method for creating an optimized communications link (SC/DC) and/or an optimized communications network (SC/DC) between at least two mobile network nodes (10, 11), **characterised in that**
a first and a second interface management module (40, 41) of a first and second mobile network node (10, 11) checks the corresponding mobile network node for available network interfaces (30, 31) and creates a first and a second lookup table (401, 411) of the available network interfaces (30, 31) of the corresponding mobile network node (10, 11),
first and/or second configuration data based on the first and/or second lookup table are transmitted between the mobile network nodes (10, 11) via a constantly accessible signaling channel (sSC), the configuration data including at least communications parameters and/or security parameters,
based on the first and/or second configuration data, at least one signaling channel (SC) is created via one of the available network interfaces (30, 31), by means of the first and/or second signaling router module (50, 51), to transmit configuration data and
based on the first and/or second configuration data, at least one data channel (DC) is created via one of the available network interfaces (30, 31) by means of a first and/or second data router module (60, 61).

2. Method according to claim 1, **characterised in that** for the configuration of the at least one signaling channel (SC) and/or for the configuration of the at least one data channel (DC) different network interfaces (30, 31) are used.

3. Method according to one of the claims 1 to 2, **characterised in that** a plurality of signaling channels (SC) and/or a plurality of data channels (DC) are created, different network interfaces (30, 31) and/or communications parameters and/or security parameters being able to be assigned to the individual signaling channels (SC) and/or the individual data channels (DC).

4. Method according to one of the claims 1 to 3, **characterised in that** the first and/or the second interface management module (40, 41) checks the corresponding mobile network node (10, 11) for available network interfaces (30, 31) at definable points in time and updates the corresponding lookup table (401,411).

5. Method according to one of the claims 1 to 4, **characterised in that** first and/or second configuration data are transmitted between the mobile network nodes (10, 11) at definable points in time and/or on the amendment of a lookup table (401,411) and that the at least one signaling channel (SC) and/or the at least one data channel (DC) are dynamically adapted and/or dynamically changed based on the transmitted configuration data.

6. Method according to one of the claims 1 to 5, **characterised in that** configuration data are transmitted unidirectionally between mobile network nodes (10, 11).

7. Method according to one of the claims 1 to 5, **characterised in that** configuration data are transmitted bidirectionally between mobile network nodes (10, 11).

8. Method according to one of the claims 1 to 7, **characterised in that** one of the signaling router modules (50, 51) as a master signaling router module carries out the coordination of the creation of the at least one signaling channel (SC).

9. Method according to one of the claims 1 to 8, **characterised in that** one of the data router modules (60, 61) as a master data router module carries out the coordination of the creation of the at least one data channel (DC).

10. Method according to one of the claims 1 to 9, **characterised in that** the configuration data include parameters for defining data security and/or reliability and/or the minimum throughput rate and/or the identification and/or paging and/or the authentication of the at least one signaling channel (SC) and/or of the at least one data channel (DC).

11. Method according to one of the claims 1 to 10, **characterised in that** network interfaces (30, 31) are at least partially dynamically configured.

12. Method according to one of the claims 1 to 11, **characterised in that** network interfaces (30, 31) are at least partially statically configured.

13. Method according to one of the claims 1 to 12, **characterised in that** outgoing data packets are buffered in a data buffer of the mobile network node (10, 11) if the network connection of the mobile network node (10, 11) is interrupted, so that the output data rate of connected applications is maintained or kept within a defined fluctuation tolerance by means of the data buffer.

14. System for creating an optimized communications link (SC/DC) and/or an optimized communications network (SC/DC) between at least two mobile network nodes (10, 11), **characterised in that**
a first and a second mobile network node (10, 11) include a first and second interface management module (40, 41), the first and the second interface management module (40, 41) including means for checking the corresponding mobile network node (10, 11) for available network interfaces (30, 31), and a corresponding memory module with a first and a second lookup table (401, 411) to store data concerning the available network interfaces (30, 31),
first and second configuration data based on the first and/or second lookup table (401,411) with communication parameters and/or security parameters are able to be transmitted over a constantly accessible signaling channel (sSC),
the first and the second mobile network nodes (10, 11) include a first and second signaling router module (50, 51), at least one signaling channel (SC) for transmission of configuration data over one of the available network interfaces (30, 31) being able to be created by means of the first and/or the second signaling router module (50, 51) based on first and/or second configuration data, and
the first and the second mobile network nodes (10, 11) include a first and a second data router module (60, 61), at least one data channel (DC) being able to be created via one of the available network interfaces (30, 31) by means of the first and/or the second data router module (60, 61) based on first and/or second configuration data.

15. System according to claim 14, **characterised in that** different network interfaces (30, 31) are usable for creating the at least one signaling channel (SC) and/or for creating the at least one data channel (DC).

16. System according to one of the claims 14 to 15, **characterised in that** a plurality of signaling channels (SC) and/or a plurality of data channels (DC) are able to be created, different communications parameters and/or security parameters being able to be assigned to the individual signaling channels (SC) and/or the individual data channels (DC).

17. System according to one of the claims 14 to 16, **characterised in that** the first and/or the second mobile network node (10, 11) is able to be checked for available network interfaces (30, 31) at definable points in time by means of the corresponding interface management module (40, 41), whereby the corresponding lookup table (401, 411) is able to be updated.

18. System according to one of the claims 14 to 17, **characterised in that** first and/or second configuration data are able to be transmitted between the mobile network nodes (10, 11) at definable points in time and/or on the amendment of the corresponding lookup table (401,411), the at least one signaling channel (SC) and/or the at least one data channel (DC) being able to be dynamically adapted and/or dynamically changed based on the transmitted configuration data.

19. System according to one of the claims 14 to 18, **characterised in that** the creation of the at least one signaling channel (SC) and/or the at least one data channel (DC) is able to be coordinated by one of the signaling router modules (50, 51) and/or one of the data router modules (60, 61) as master signaling router module and/or as master data router module.

## Revendications

1. Procédé pour établir un lien de communication optimisé (SC/DC) et/ou un réseau de communication optimisé (SC/DC) entre au moins deux noeuds de réseau mobiles (10, 11), **caractérisé en ce que**
un premier et un deuxième module d'administration d'interface (40, 41) d'un premier et deuxième noeud de réseau mobile (10, 11) vérifie le noeud de réseau mobile correspondant pour des interfaces de réseau disponibles (30, 31) et génère une première et deuxième table de conversion (401,411) avec des interfaces de réseau disponibles (30, 31) du noeud de réseau mobile (10, 11) correspondant,
des premières et/ou deuxièmes données de configuration basées sur la première et/ou deuxième table de conversion sont transmises entre les noeuds de réseau mobiles (10, 11) via un canal de signalisation accessible constamment (sSC), les données de configuration incluant au moins des paramètres de communication et/ou paramètres de sécurité,
basé sur les premières et/ou deuxièmes données de configuration, au moins un canal de signalisation (SC) est généré via une des interfaces de réseau disponibles (30, 31), au moyen du premier et/ou deuxième module de routeur de signalisation (50, 51), pour transmettre des données de configuration et
basé sur les premières et/ou deuxièmes données de configuration, au moins un canal de données (DC) est généré via une des interfaces de réseau disponibles (30, 31) au moyen d'un premier et/ou deuxième module de routeur de données (60, 61).

2. Procédé selon la revendication 1, **caractérisé en ce que** pour la configuration dudit au moins un canal de signalisation (SC) et/ou pour la configuration dudit au moins un canal de données (DC) des interfaces de réseau différentes (30, 31) sont utilisées.

3. Procédé selon l'une des revendications 1 à 2, **caractérisé en ce qu'**une pluralité de canaux de signalisation (SC) et/ou une pluralité de canaux de données (DC) sont générés, des interfaces de réseau différentes (30, 31) et/ou paramètres de communication et/ou paramètres de sécurité étant agencés pour être attribués aux canaux de signalisation individuels (SC) et/ou aux canaux de données individuels (DC).

4. Procédé selon l'une des revendications 1 à 3, **caractérisé en ce que** le premier et/ou le deuxième module d'administration d'interface (40, 41) vérifie le noeud de réseau mobile correspondant (10, 11) pour des interfaces de réseau disponibles (30, 31) aux instants donnés et met à jour la table de conversion correspondante (401,411).

5. Procédé selon l'une des revendications 1 à 4, **caractérisé en ce que** les premières et/ou deuxièmes données de configuration sont transmises entre les noeuds de réseau mobiles (10, 11) aux instants donnés et/ou lorsqu'on modifie une table de conversion (401, 411) et que ledit au moins un canal de signalisation (SC) et/ou ledit au moins un canal de données (DC) sont adaptés de façon dynamique et/ou changés de façon dynamique basés sur les données de configuration transmises.

6. Procédé selon l'une des revendications 1 à 5, **caractérisé en ce que** des données de configuration sont transmises unidirectionnellement entre des noeuds de réseau mobiles (10, 11).

7. Procédé selon l'une des revendications 1 à 5, **caractérisé en ce que** des données de configuration sont transmises bidirectionnellement entre des noeuds de réseau mobiles (10, 11).

8. Procédé selon l'une des revendications 1 à 7, **caractérisé en ce qu'**un des modules de routeur de signalisation (50, 51) en tant qu'un module de routeur de signalisation maître effectue la coordination de la génération dudit au moins un canal de signalisation (SC).

9. Procédé selon l'une des revendications 1 à 8, **caractérisé en ce qu'**un des modules de routeur de données (60, 61) en tant qu'un module de routeur de données maître effectue la coordination de la génération dudit au moins un canal de données (DC).

10. Procédé selon l'une des revendications 1 à 9, **caractérisé en ce que** les données de configuration incluent des paramètres pour définir la sécurité de données et/ou la fiabilité et/ou le taux de débit minimum et/ou l'identification et/ou la radiomessagerie et/ou l'authentification dudit au moins un canal de signalisation (SC) et/ou dudit au moins un canal de données (DC).

11. Procédé selon l'une des revendications 1 à 10, **caractérisé en ce que** des interfaces de réseau (30, 31) sont au moins partiellement configurées de façon dynamique.

12. Procédé selon l'une des revendications 1 à 11, **caractérisé en ce que** des interfaces de réseau (30, 31) sont au moins partiellement configurées de façon statique.

13. Procédé selon l'une des revendications 1 à 12, **caractérisé en ce que** des paquets de données sortantes sont tamponnés dans une mémoire tampon de données du noeud de réseau mobile (10, 11) si la connexion de réseau du noeud de réseau mobile (10, 11) est interrompue, de manière qu'au moyen de la mémoire tampon de données le taux de débit de sortie des applications connectées soit maintenu ou maintenu dans les limites d'une tolérance de fluctuation définie.

14. Système pour générer un lien de communication optimisé (SC/DC) et/ou un réseau de communication optimisé (SC/DC) entre au moins deux noeuds de réseau mobiles (10, 11), **caractérisé en ce que**
un premier et deuxième noeud de réseau mobile (10, 11) incluent un premier et deuxième module d'administration d'interface (40, 41), le premier et le deuxième module d'administration d'interface (40, 41) incluant des moyens pour vérifier le noeud de réseau mobile correspondant (10, 11) pour des interfaces de réseau disponibles (30, 31), et un module de mémoire correspondant avec une première et deuxième table de conversion (401,411) pour sauvegarder des données concernant les interfaces de réseau disponibles (30, 31),
des premières et deuxièmes données de configuration basées sur la première et/ou deuxième table de conversion (401, 411) avec des paramètres de communication et/ou paramètres de sécurité sont agencées pour être transmises à travers un canal de signalisation accessible constamment (sSC),
le premier et le deuxième noeud de réseau mobile (10, 11) incluent un premier et deuxième module de routeur de signalisation (50, 51), au moins un canal de signalisation (SC) pour transmettre des données de configuration à travers l'une des interfaces de réseau disponibles (30, 31) étant agencé pour être généré au moyen du premier et/ou deuxième module de routeur de signalisation (50, 51) basé sur des premières et/ou deuxièmes données de configuration, et
le premier et le deuxième noeuds de réseau mobiles (10, 11) incluent un premier et un deuxième module de routeur de données (60, 61), au moins un canal de données (DC) étant agencé pour être généré via l'une des interfaces de réseau disponibles (30, 31) au moyen du premier et/ou deuxième module de routeur de données (60, 61) basé sur des première et/ou deuxième données de configuration.

15. Système selon la revendication 14, **caractérisé en ce que** des interfaces de réseau différentes (30, 31) sont utilisables pour générer ledit au moins un canal de signalisation (SC) et/ou pour générer ledit au moins un canal de données (DC).

16. Système selon l'une des revendications 14 à 15, **caractérisé en ce qu'**une pluralité de canaux de signalisation (SC) et/ou une pluralité de canaux de données (DC) sont agencés pour être générés, des paramètres de communication et/ou paramètres de sécurité différents étant agencés pour être attribués aux canaux de signalisation individuels (SC) et/ou aux canaux de données individuels (DC).

17. Système selon l'une des revendications 14 à 16, **caractérisé en ce que** le premier et/ou le deuxième noeud de réseau mobile (10, 11) est agencé pour être vérifié pour des interfaces de réseau disponibles (30, 31) aux instants donnés au moyen du module d'administration d'interface correspondant (40, 41), où la table de conversion correspondante (401, 411) est agencée pour être mise à jour.

18. Système selon l'une des revendications 14 à 17, **caractérisé en ce que** les premières et/ou deuxièmes données de configuration sont agencées pour être transmises entre les noeuds de réseau mobiles (10, 11) aux instants donnés et/ou lorsqu'on modifie la table de conversion correspondante (401, 411), ledit au moins un canal de signalisation (SC) et/ou ledit au moins un canal de données (DC) étant agencé pour être adapté de façon dynamique et/ou changé de façon dynamique basé sur les données de configuration transmises.

19. Système selon l'une des revendications 14 à 18, **caractérisé en ce que** la génération dudit au moins un canal de signalisation (SC) et/ou ledit au moins un canal de données (DC) est agencée pour être coordonnée par l'un des modules de routeur de signalisation (50, 51) et/ou l'un des modules de routeur de données (60, 61) en tant qu'un module de routeur de signalisation maître et/ou en tant qu'un module de routeur de données maître.
